# EUROPEAN PATENT SPECIFICATION

(11) **EP 2 471 642 B1**
(45) Date of publication and mention of the grant of the patent: **30.07.2014**
(21) Application number: 10197390.7
(22) Date of filing: 30.12.2010
(51) Int. Cl.: B29B 17/04, B29B 13/10

(54) **Micronizing apparatus and method for micronizing of vulcanized elastomeric materials**
Mikronisierungsvorrichtung und Verfahren zur Mikronisierung vulkanisierter Elastomermaterialien
Appareil de micronisation et procédé de micronisation de matériaux élastomères vulcanisés

(43) Date of publication of application: 04.07.2012
(73) Proprietor: Caglayan, Mufit, Sariyer-Istanbul 34450 (TR)
(72) Inventor: Caglayan, Mufit, Sariyer-Istanbul 34450 (TR)
(74) Representative: Bardehle, Heinz

(56) References cited:
- EP-A1- 1 172 147
- EP-A2- 0 153 754
- SU-A1- 812 594
- SU-A1- 1 245 440
- US-A- 2 176 808

## Description

### 1. Technical field

For the recycling of vulcanized elastomeric materials, for example rubber of used tires, a micronizing of the vulcanized elastomeric material is necessary. Unlike down-cycling of vulcanized products, the present invention refers to an apparatus and a method that allows to fully recycle the elastomeric vulcanized material such that for example the rubber of a used tire can be used as raw material for the production of new tires.

### 2. Prior art

Vulcanized elastomeric materials, for example the rubber of tires, nowadays is mostly down-cycled, i.e. shredded to granules in the range of centimeters or several millimeters and then used for the production of goods that require the vulcanized elastomeric material in granular form. Such materials are for example damping mats or floor mats for the agriculture or for the use in synthetic turf. The main use for shredded vulcanizes elastomeric materials is tire derived fuel for example for a cement plant.

Besides these down-cycling uses nowadays efforts were made to provide a real recycling of vulcanized elastomeric materials, for example of old tires. In order to ensure a recycling of such material, very small particle sizes for example below 1 mm and a large surface area of the particles is necessary. Only such powder like recycling material is an active powder what preserves the properties of the original polymer and can be used for a re-vulcanization.

One commonly known method to provide powder of vulcanized elastomeric materials is for example the so called "cryogenic grinding" in which liquid nitrogen is used for cooling down shredded vulcanized elastomeric granules such that they can be ground to a fine powder. The cryogenic grinding is described in the document WO 2005/049656 A2. This method however requires about 1 liter of liquid nitrogen and about 0.60 kWh energy for only 1 kg of powder material. Therefore, such cryogenic grinding is very expensive, mostly because of the costs of the liquid nitrogen such that this method has no widespread use.

Another way of providing a recyclable material is high speed grinding in turbo mills. This method is explained for example in the documents WO 01/28690 A1, DE 41 25 572 A1 and US 4,880,169. However, such high speed grinding also requires a high amount on energy of about 2 kWh per kg of powder. Further, the method and has the disadvantage of an overheating and excessive wear of the used turbo mill.

Another method of providing micronized vulcanized elastomeric particles uses a specially designed two stage extruder wherein the micronizing is done in two steps. Such a system is described in the EP 1362 681 A1. The system however requires also a high amount of energy in the range of 2.5 kWh per kg of powder and additional has high operation costs.

The EP 1172 147 A1 discloses a rubber micronizing apparatus having two stacks of micronizing discs engaging each other. The discs rotate in opposite directions. One stack of discs is set into a vibration in radial direction via an external drive.

Another rubber grinding apparatus is disclosed in the SU 1245440 A1.

In view of the above it is the problem of the present invention to provide a micronizing apparatus for vulcanized elastomeric materials and a corresponding micronizing method that overcome the above-mentioned disadvantages of prior art systems. Preferably, the apparatus and method should provide particles in the required size range for a real recycling of the vulcanized elastomeric material, provides a large surface of the particles, and requires less energy than the prior art systems. Further the apparatus should show less wear than prior art systems.

### 3. Summary of the invention

The above-mentioned problems are solved by a micronizing apparatus for vulcanized elastomeric materials according claim 1 and a method for micronizing of vulcanized elastomeric materials according claimed 11.

The micronizing apparatus according to the invention for vulcanized elastomeric materials comprises a first micronizing disc rotating in a first rotational direction, a second micronizing disc rotating in a second rotational direction, wherein the first micronizing disc is in engagement with the second micronizing disc in order to provide a micronizing contact area in which the elastomeric granules are micronized to elastomeric powder, and the first rotational direction and the second rotational direction are the same and the movement direction of the first and second micronizing discs at the micronizing contact area are opposed to each other.

By means of the above micronizing apparatus, the vulcanized elastomeric particles, preferably coarse shredded rubber granules of used tires, are micronized in-between two micronizing discs that engage each other. Since the rotational direction of the first micronizing disc and the second micronizing disc are the same, and since the movement directions of the micronizing discs in the contact area are opposed to each other the elastomeric particles remain a certain, well-defined time within the micronizing contact area and are disintegrated to a powder. Due to this movement directions the granules are not easily fed through the contact area as in usual milling systems but kept within the contact area until they are disintegrated to the desired particle size. Instead of simply crunching the particles in between the second and first micronizing disc they are rather rolled in-between the first and the second micronizing discs such that they disintegrate by mechanical deformation, friction of the granules in-between each other and the micronizing discs, and heat generation. As a result of the synergistic effect of the elastic deformation of the material during the process of micronizing in-between the two micronizing discs, the internal elastic potential energy, the mechanical energy produced during the crushing pressure and the friction energy of the rubber parts the micronizing apparatus leads to a chain reaction wherein the vulcanized elastomeric granules are micronized to a vulcanized elastomeric powder.

The friction between the vulcanized elastomeric particles in the micronizing contact area is advantageously used for the micronizing process.

The micronizing discs are shaped as truncated cones and the micronizing contact area is provided in-between the surfaces of the cones. Micronizing discs in the shape of truncated cones facilitate the generation of the above-mentioned high-frequency oscillation and provide a wedge-shaped micronizing contact area that is favourable for the micronization of vulcanized elastomeric granules to powder wherein the wedge of the micronizing contact area has a very pointed angle.

At least one of the micronizing discs oscillates transversally with regard to the rotation axis thereof during the micronizing process. Preferably at least one of the micronizing discs oscillates with a high frequency. The oscillation facilitates the micronizing process, since it can provide very high compression forces onto the micronizing contact area.

Preferably, the oscillation of at least one micronizing disc is generated by the separation and stretching of the vulcanized elastomeric granules within the micronizing contact area. Since the granules are comparably soft, compressible and can store potential energy, during the micronization process they generate an oscillation of at least one micronizing disc such that according to the invention for the oscillation no external oscillation means is required but the micronizing disc itself. Preferably the oscillation is a high frequency oscillation in the range of 1000 to 10.000 Hz. Due to this effect, it is preferred to provide the vulcanized elastomeric granules at ambient temperature.

Preferably, the rotational speed of the first micronizing disc and the rotational speed of the second micronizing speed are different, more preferred the rotational speed of one micronizing disc is 10 - 20 times higher than the rotational speed of the other micronizing disc. By means of the different speeds of the micronizing discs with respect to each other, the micronizing rate, i.e. the amount of micronized vulcanized elastomeric particles transported through the micronizing contact area per time and the particle size can be adjusted. If the difference of the speeds of the micronizing discs is high then the micronizing rate becomes high but the diameter of the powder particles increases, too. Exemplary speeds of one micronizing disc are 50 - 300 rpm or 90 - 100 rpm wherein the rotational speed of the other micronizing disc would be in the range of 2 - 20 rpm.

Preferably, the contact surfaces of the micronizing discs are coated with a wear-resisting coating material and/or have a rough surface. The wear-resistant coating material and/or the rough surface further improve the micronizing process, since the elastomeric granules or particles have a better friction coefficient on a rough surface and the micronizing discs have a better lifetime if they are coated with a wear-resistant coating material. Examples for such a wear-resistant coating material are diamond, carbide and tungsten carbide.

Preferably the micronizing apparatus further comprises an electronically controlled feeding system for the vulcanized elastomeric granules with an electronically controlled feed rate. By controlling the feed rate of the vulcanized elastomeric granules to be micronized, the size of the resulting micronized powder can be adjusted. It has to be ensured that not too much granules as stock material is fed to the micronizing discs in order not to deteriorate the micronizing process. On the other hand, if too little granules are provided the preferred oscillation of the micronizing disc is not generated.

Preferably, the micronizing apparatus for vulcanized elastomeric materials further comprises a high pressure water mist cooling system and/or a nitrogen cooling system. By means of such kind of high pressure water mist cooling system or nitrogen cooling system, the micronizing discs and the vulcanized elastomeric particles are cooled down such that the first and second micronizing discs and the elastomeric particles do not overheat. Therefore, the water mist cooling system prevents deterioration of the micronizing process and sticking of the powder particles together. With this cooling system it is also avoided that during a sudden temperature increase, a spark is ignited which would cause a burning of the micronized particles. Unlike the cryogenic grinding the nitrogen cooling does not freeze the elastomeric granules to make them brittle and grindable, it simply avoids overheating of the system. It is preferred to use the high pressure water mist cooling system since it its very cost efficient and reliable and has a positive effect on the surface area of the powder particles.

Preferably, the micronizing apparatus for vulcanized elastomeric materials further comprises an electronic control system for controlling the rotational speeds of the first and second micronizing discs. The electronic control system for controlling the first and second rotational speeds ensures that these speeds are kept constant which is required for obtaining powder particle sizes in a desired range.

Preferably, the electronic control system for controlling the first and second rotational speed and the electronically controlled feeding system comprise a common PLC (programmable logic control) system.

Preferably, the micronizing apparatus for vulcanized elastomeric materials further comprises a powder activator unit that includes the first and second micronizing discs, and/or course sieving unit, preferably comprising two mesh sieves upstream the powder activator unit, and/or a fine powder collector upstream the course sieving unit, and/or a course powder collector upstream the course sieving unit, and/or a central vacuum unit that provides a vacuum for the transport of vulcanized elastomeric powder.

The above mentioned problems are also solved by a method for micronizing of vulcanized elastomeric materials, comprising the steps of (a.) rotating a first micronizing disc in a first rotational direction, (b.) rotating a second micronizing disc in a second rotational direction, wherein the first micronizing disc is in engagement with the second micronizing disc in order to provide a micronizing contact area, wherein the first rotational direction and the second rotational direction are the same, the movement direction of the first and second micronizing discs at the micronizing contact area are opposed to each other, the micronizing discs are shaped as truncated cones and the micronizing contact area is provided in-between the surfaces of the cones (c.) feeding vulcanized elastomeric granules to the micronizing contact area, and (d.) rolling and simultaneously compressing the elastomeric granules in-between the first and second micronizing discs in order to disintegrate the elastomeric granules by deformation, heat generation and friction in-between the elastomeric granules to form elastomeric powder; wherein (e.) the rolling and compressing step further includes an oscillation of one of the first and secon micronizing discs transversally with regard to the rotation axis thereof during the micronizing process; and the method comprising the further step of (f.) generating the oscillation only by the separation and stretching of the vulcanized elastomeric granules within the micronizing contact area.

Since the elastomeric granules are rolled and compressed in-between the first and second micronizing discs the synergistic effect of mechanical compression, friction in-between the granules and the micronizing discs is used for the micronizing of the granules. Thereby, heat is generated that further facilitates the disintegration of the granules and particles thereof. Since the first and second micronizing discs are rotated in the same rotational direction, the elastomeric granules stay a certain time within the micronizing contact area. This time is much longer than the time if the discs would rotate in opposite directions. Further, since the rotational directions of the discs are the same and the movement directions of the first and second micronizing discs at the micronizing contact area are opposed to each other the elastomeric granules and particles are "rolled" in-between the first and second micronizing discs, such that the internal friction within the particles significantly increases compared to granules and particles which simply would be fed through micronizing discs that rotate in opposite directions.

This "rolling" further causes that too-large elastomeric particles stay longer in the micronizing contact area than already micronized powder particles which fall through the micronizing contact area. This ensures that the micronization grade, i.e. the diameter of the particles, is in a range that makes a real recycling of the elastomeric material possible. Further, this method ensures that a micronization can be done with much less energy than the prior art methods, i.e. for example the energy consumption may be 0.36 kWh/kg, or even less than 0.25 kWh, only. Simultaneously, the particle size is in a range of 10 to 250 µm, whereas simultaneously the surface area of the micronized powder achieves 0.2 to 0.9 m²/g compared to 0.05 m²/g of cryogenic grinding.

Preferably, the rolling and compressing step further includes a high-frequency oscillation of one of the first and second micronizing discs. The high frequency oscillation of at least one of the micronizing discs generates very high contact pressures in the micronizing contact area which further improve the micronizing process.

Preferably the rolling and compressing step further includes the cooling by introducing water mist. The micronizing discs and the micronized material can be cooled by introducing water mist, which is very cost efficient compared to other cooling systems. The water mist further improves the quality and the surface size of the micronized powder particles, since it avoids an adhesion of the powder particles. Further, it seems that water droplets of the water mist evaporate when contacting the hot micronized particles which blasts away parts of the surface of the powder particles such that the surface areas of the elastomeric powder particles are additionally increased.

Preferably, by the micronizing apparatus and the method for micronizing of vulcanized elastomeric materials, micronized elastomeric particles are provided that have a surface area of 0.2 to 0.9 m²/g and/or a diameter of 10 to 250 µm. Micronized elastomeric particles in this surface area range and diameter range can be used for a real recycling of vulcanized elastomeric materials.

Further preferred embodiments result from the dependent claims.

### 4. Short description of the drawings

In the following, preferred embodiments of the invention are described with respect to the drawings. In which shows:
- Fig. 1: a side view of the key parts of a micronizing apparatus for vulcanized elastomeric materials in a schematic side sectional view;
- Fig. 2: a top view of two micronizing discs;
- Fig. 3: a three-dimensional view of a micronizing apparatus for vulcanized elastomeric materials in a preferred embodiment;
- Fig. 4A: a microscopic view of micronized vulcanized elastomeric powder particles obtained with an apparatus or a method according the present invention;
- Fig. 4B: a microscopic view of micronized vulcanized elastomeric powder particles obtained by cryogenic grinding according the prior art;
- Fig. 5: a size distribution chart for micronized vulcanized elastomeric powder particles according to the invention; and
- Fig. 6: a schematic sectional view of a micronizing contact area in-between two micronizing discs.

### 5. Description of preferred embodiments

In the following, preferred embodiments of the invention are described with reference to the figures.

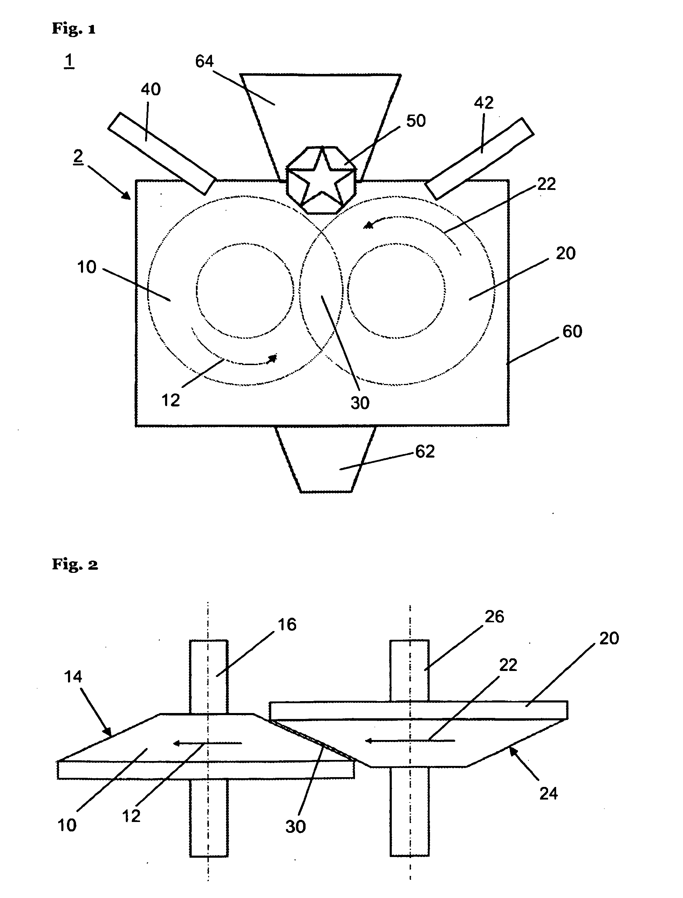

Figure 1 shows a schematic side view of the powder activator unit 2 of a micronizing apparatus for vulcanized elastomeric materials 1. The micronizing apparatus 1 and particularly the powder activator 2 comprise a housing 60, in which a first micronizing disc 20 and a second micronizing disc 10 are rotatably arranged. The rotation axis of the rotation shaft 26 first micronizing disc 20 and rotation axis of the rotation shaft 16 the second micronizing disc 10 are parallel to each other and horizontally arranged, see Fig. 2.

As it can be seen in Fig. 2, two micronizing discs 10, 20 preferably have the shape of a truncated cone and each have cone-shaped contact surfaces 14, 24 which serve for the micronizing of vulcanized elastomeric granules and particles. The rotation shafts 16, 26 micronizing discs 10, 20 are rotatable driven, preferably by an electric motor (not shown), and rotatable supported in the housing 60. The contact surfaces 14, 24 contact each other and provide a micronizing contact area 30 in-between the first and the second micronizing discs 10, 20. The micronization process of the vulcanized elastomeric particles is performed within the micronizing contact area 30. The contact surfaces 14, 24 are coated with a wear-resistant coating material such as diamond (for example as diamond like coating, DLC), carbide and tungsten carbide and preferably have a rough surface in order to increase the friction coefficient thereof.

An electronically controlled main motor drive (not shown) drives the first micronizing disc 20 and an electronically controlled secondary motor drive (not shown) drives the second micronizing disc 10. The main motor drive is preferably an electric motor having a power of 22 kW with a nominal rotational speed of 1500 rpm and drives the first micronizing disc 20 with a speed of preferably 50 - 300 rpm and more preferred of 90 - 100 rpm. The secondary motor drive is preferably an electric motor having a power of 2.2 kW with a nominal rotational speed of 1500 rpm and drives the second micronizing disc 10 with a speed of preferably 2 - 20 rpm and more preferred of 6 - 10 rpm. Therefore, the rotational speed of the first micronizing disc 20 is about 10 - 20 times higher than the rotational speed of the second micronizing disc 10. For a high efficiency and for smaller particles the rotational speed of the second disc 10 can be reduced to 2 rpm. The motor drives are preferably PLC controlled to ensure a constant rotational speed for each micronizing discs 10, 20. Additionally a motor protection system is implemented that avoids a damage of the motor drives due to overload. This motor protection system may include an ammeter to measure the required electrical current. Due to the use of slowly running micronizing discs 10, 20 with high torque the overall energy consumption for the micronizing apparatus 1 is very small and requires only about 0.36 kWh/kg or even less than 0.25 kWh/kg of power.

The micronizing discs 10, 20 are comparably slowly running with about 90 - 100 rpm or about 2 - 20 rpm, respectively, and are made of a high wear-resistant material with special surface treatment and coating. The micronizing discs 10, 20 have a high availability since they are maintenance-free working tools. The micronizing apparatus 1 does not comprise any knives, nor other cutting tools and thus does not require any sharpening of such tools.

The micronizing apparatus 1 further comprises an inlet hopper 64 into which the stock material of vulcanized elastomeric granules is introduced. The vulcanized elastomeric granules preferably are derived from shredded tires or are other elastomeric rubber materials or even cross-linked PE and EVA foam, EPDM, Viton, FKM, Silicon rubber, Nitrile rubber, natural rubber, SBR rubber or Butyl rubber. The stock material is provided in form of granules that have a size of several millimetres. Steel parts and fibre materials of the used shredded tires has been removed from the stock material by usual measures like magnets and sieves. Additionally, suction in the inlet hopper 64 removes remaining parts of textiles or the like that should not enter the micronization process.

At the outlet of the inlet hopper 64 an electronically controlled feeding system 50 is arranged that exactly controls the amount of stock material granules fed to the micronizing contact area 30 of the first and second micronizing discs 10, 20. The feeding system 50 comprises a removable rotary valve and allows an easy cleaning due to removable parts. The feeding system 50 ensures that exactly the required amount of elastomeric granules is provided to the micronizing contact area 30 to ensure that the micronizing process - which is described later in detail - is working properly and providing micronized vulcanized elastomeric powder particles of the desired size and surface area range. The electronically controlled feeding system 50 further prevents from a damage of the micronizing discs 10, 20 due to overload. In a certain embodiment the feeding system 50 is controlled by a PLC system that also controls the motors drives and the rotation of the micronizing discs 10, 20. This ensures the synergy of these components, a constant quality of the powder and minimizes the energy consumption. For example the main motor drive is driven with 40 Amps current in order to have the maximum efficiency. Then the PLC system coordinates the feed rate in respect to the secondary motor drive. If the maximum feed rate is not enough to keep 40 Amps at the main motor drive the secondary motor drive slows down. If the minimum feed rate overloads the main motor drive the secondary motor drive increases the speed.

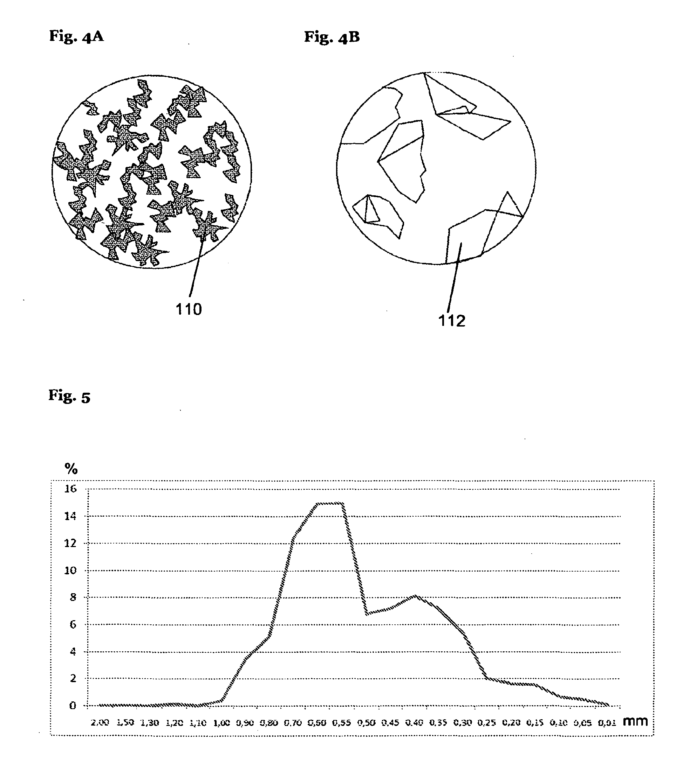

In order to cool down the micronizing discs 10 and 20, a water mist cooling system is installed having high-pressure water mist nozzles 40 and 42. By means of this water mist cooling system, high pressure water of about 70 bars is nebulised into very small droplets of water (water mist) which can take up very high amounts of heat energy and requires very little volumes of water. This is because the surface of the water droplets is very high in relation to the water volume of each droplet. The water mist further cools down the vulcanized elastomeric particles during the micronization process. It is assumed that the water mist improves the quality of the obtaining elastomeric powder by evaporation of small water droplets at the surface of the hot vulcanized elastomeric particles which may blast away particles of the surface of the powder particle. This improves the generation of the rough surface structure of the powder particles that can be seen in Fig. 4A compared to the rather smooth surface structure of prior art particles of Fig. 4B produced with a cryogenic milling system. The water mist cooling system 40, 42 further avoids a deterioration of the vulcanized elastomeric material due to a high heat.

Additionally the water mist cooling system 40, 42 is controlled by a temperature sensor and a spark sensor in order to avoid an ignition of the produced vulcanized elastomeric powder particles 110.

After the micronization, the vulcanized elastomeric powder particles 110 exit the powder activator 2 through outlet 62.

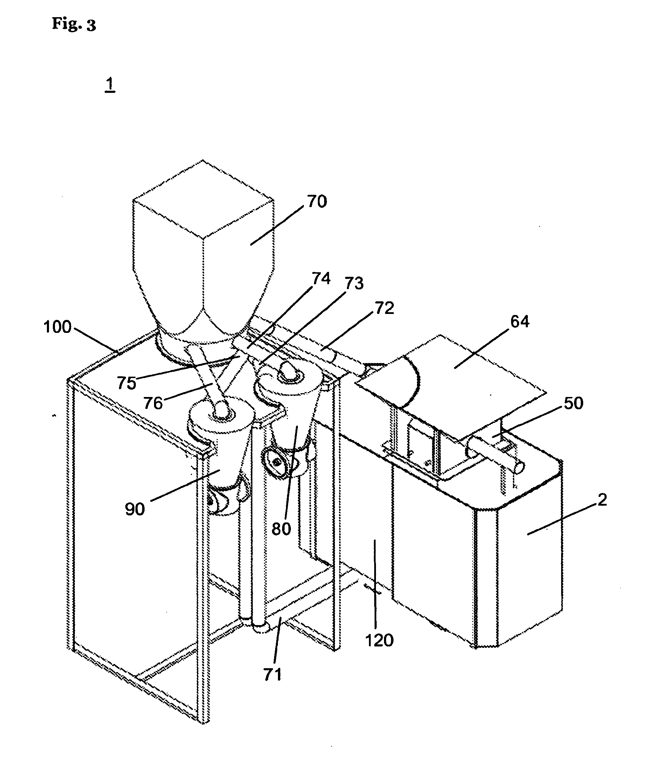

Figure 3 shows further elements of the micronizing apparatus 1 including the above-mentioned powder activator 2, a coarse sieving unit 120, a central vacuum unit 70 for the transport of the micronized vulcanized elastomeric particles, a fine powder collector 80, a coarse powder collector 90 and a support 100. The elastomeric powder 110 that exits the powder activator 2 through the outlet 62 enters the course sieving unit 120 that comprises two sieves having different mesh sizes. The sieves have a large surface area and separate micronized vulcanized elastomeric particles of the desired size from oversize particles which are fed again through the powder activator 2.

From the course sieving unit 120, the vulcanized elastomeric powder is fed by air that is generated by a central vacuum unit 70 through pipes 71, 72, 73, and 75 to a horizontal centrifugal sieve system 80, 90 with a fine powder collector 80 having a mesh sieve of the size 60 for a particle size of 250 µm or less and to a coarse powder collector 90 having a mesh sieve of the size 35 for a particle size of 425 µm or less. Larger powder particles may be transported to a waste and dirty powder collector (not shown) by the central vacuum unit 70 via return pipes 74 and 76. The powder and waste collectors 80, 90 may have level sensors to prevent an overflow. Easily removable parts of the powder and waste collectors 80, 90 ensure an easy cleaning. Preferably, the central vacuum unit 70 and the coarse and fine powder collectors 80, 90 are supported by a support 100.

The micronizing apparatus 1 has a capacity to micronized 100 to 150 kg/h of vulcanized elastomeric granules to a powder having particle sizes of 425 µm as mean value, see Fig. 5. The micronizing apparatus 1 further enables to obtain even smaller particle sizes of 250 µm and even 50 - 100 µm if needed in low pressure production methods like extrusion. Preferably, shredded rubber in form of granules of a diameter of 1 to 5 mm is used as stock material. In general the output is a elastomeric powder preferably having a particle size range of 1 to 600 µm.

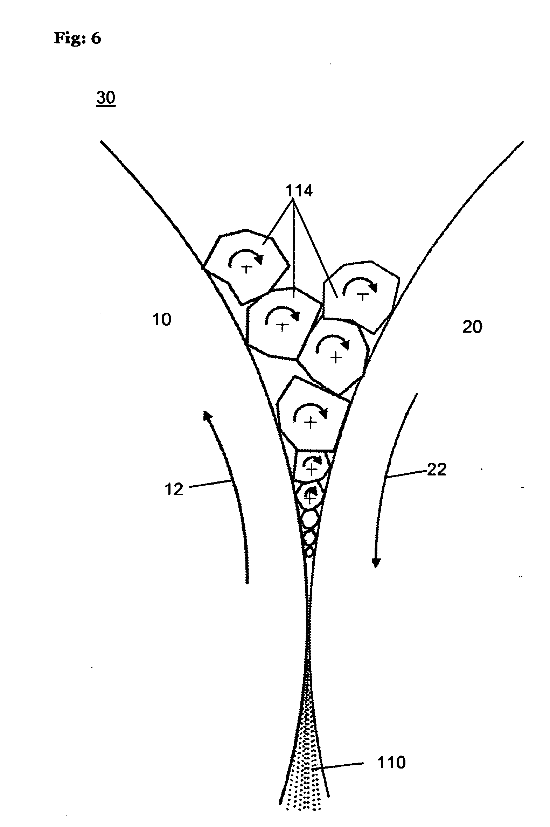

As seen in detail in Fig. 6 the micronizing process is done in the micronizing contact area 30 between the first and second micronizing discs 10, 20 that rotate in the same rotational direction. In the contact area 30 the movement directions 12, 22 of the first and second micronizing discs 10, 20 are opposed to each other. Preferably, the rotational speed of micronizing disc 20 is greater (10 - 20 times) than the rotational speed of micronizing disc 10. Therefore, the rubber granules 114 are compressed and simultaneously rolled in-between the contact surfaces 14, 24 of the micronizing discs 10, 20, as indicated in Fig. 6, until due to friction, compression, and the generated heat, these rubber granules 114 are stretched and torn into powder particles 110 of the desired diameter. This process is facilitated by a high frequency oscillation or vibration of at least one of the micronizing discs 10, 20 which occurs during the micronization due to the potential energy stored in each compressed elastomeric granule 114. The special cone shape of the micronizing discs 10, 20 enables that this high frequency vibration and oscillation occurs, and which provides very high compression forces such that the disintegration process is further facilitated.

The friction between the elastomeric granules 114 on the contact surfaces 14, 24 and in-between the elastomeric granules 114 further facilitates the disintegration of the granules 114 and generates a high amount of heat. This heat on the one hand further improves the disintegration and micronization but on the other hand cause that the powder particles would adhere to each other and again would form larger particles. To avoid such a sticking and combination of the particles a high pressure water mist system 40, 42 is used to cool down on the one hand the micronizing discs 10, 20 and on the other hand the elastomeric particles itself. Further, it is assumed that the water droplets further improve the surface area of the powder particles if they evaporate on the surface of such a hot particle and blast parts of the surface of the elastomeric particle away.

Figure 4A shows the resulting micronized vulcanized elastomeric powder particles made according to the invention in a microscopic view. One can see that the elastomeric particles are very small in diameter but - even more important - have a very irregular and, therefore, very large surface area such that the particles 110 become active, i.e. suitable for further vulcanization. The surface area of theses powder particles 110 is very high and reaches 0.2 to 0.9 m²/g.

In figure 4B, prior art elastomeric particles obtained from prior art cryogenic grinding system are shown in a microscopic view. These particles have a rather smooth surface, and are comparably large such that they are not as suitable for further vulcanization as the particles of Fig. 4A.

Figure 5 shows a size distribution chart for the diameter of micronized vulcanized elastomeric particles according to the invention. It has to be noted that by controlling the speed of the micronizing discs 10, 20, the feed rate and the contact pressure in the micronizing contact area 30 a different size distribution i.e. with smaller particles can be achieved.

With such a micronizing apparatus 1, a variety of cross-linked rubber and thermoplastic materials can be brought into a powder form for example rubber, PE, EVA foam, EPDM, Viton, FKM, Silicon rubber, Nitrile rubber, natural rubber, SBR rubber or Butyl rubber.

A further measure to adjust the particle size is the adjustment of the rotational speed of the first and second micronizing discs (10, 20). Preferably, the rotational speed of the second micronizing disc 10 is lower than the rotational speed of the first micronizing disc 20. Therefore, it is ensured that the elastomeric granules 114 are drawn into the micronizing contact area 30 when fed from the feeding system 50. The difference between the rotational speeds determines the time the granules 114 are micronized in-between the micronizing contact area 30 and therefore determines the obtained powder particle size.

## Claims

1. Micronizing apparatus for vulcanized elastomeric materials (1) comprising:
a. a first micronizing disc (20) rotating in a first rotational direction (22);
b. a second micronizing disc (10) rotating in a second rotational direction (12), wherein
c. the first micronizing disc (20) is in engagement with the second micronizing disc (10) in order to provide a micronizing contact area (30) for micronizing elastomeric granules (114) to elastomeric powder (110); and
d. the first rotational direction (22) and the second rotational direction (12) are the same and the movement directions of the first and second micronizing discs (10, 20) at the micronizing contact area (30) are opposed to each other, **characterized in that**
e. the micronizing discs (10, 20) are shaped as truncated cones and the micronizing contact area (30) is provided in-between the surfaces of the cones;
f. at least one of the micronizing discs (10, 20) is arranged to oscillate transversally with regard to the rotation axis thereof during the micronizing process; and
g. the micronizing apparatus does not comprise external oscillation means for the oscillation of at least one of the micronizing discs (10, 20).

2. Micronizing apparatus for vulcanized elastomeric materials (1) according to claim 1, wherein the rotational speed of the first micronizing disc (20) and the rotational speed of the second micronizing disc (10) are different, preferably the rotational speed of one micronizing disc (10, 20) is 10 - 20 times higher than the rotational speed of the other micronizing disc (10, 20).

3. Micronizing apparatus for vulcanized elastomeric materials (1) according to one of the claims 1 or 2, wherein at least one of the micronizing discs (10, 20) oscillates with a frequency of 1.000 to 10.000 Hz.

4. Micronizing apparatus for vulcanized elastomeric materials (1) according to one of the claims 1 - 3, wherein the oscillation of at least one of the micronizing discs (10, 20) is generated by the separation and stretching of the vulcanized elastomeric granules within the micronizing contact area (30).

5. Micronizing apparatus for vulcanized elastomeric materials (1) according to one of the claims 1 - 4, wherein the contact surfaces (14, 24) of the micronizing discs (10, 20) are coated with a wear-resistant coating material and/or have a rough surface.

6. Micronizing apparatus for vulcanized elastomeric materials (1) according to one of the claims 1 - 5, further comprising an electronically controlled feeding system (50) for providing vulcanized elastomeric granules (114) with an electronically controlled feed rate.

7. Micronizing apparatus for vulcanized elastomeric materials (1) according to one of the claims 1 - 6, further comprising a high-pressure water mist cooling system (40, 42) and/or a nitrogen cooling system.

8. Micronizing apparatus for vulcanized elastomeric materials (1) according to one of the claims 1 - 7, further comprising an electronic control system for controlling the rotational speeds of the first and second micronizing discs (10, 20).

9. Micronizing apparatus for vulcanized elastomeric materials (1) according to claim 8, wherein the electronic control system for controlling the first and second rotational speeds and the electronically controlled feeding system (50) comprise a common programmable logic control system.

10. Micronizing apparatus for vulcanized elastomeric materials (1) according to one of the claims 1 - 9 further comprising:
a. a powder activator unit (2) that includes the first and second micronizing discs (10, 20); and/or
b. a coarse sieving unit (120), preferably comprising two mesh sieves upstream the powder activator unit (2); and/or
c. a fine powder collector (80) upstream the coarse sieving unit (120); and/or
d. a coarse powder collector (90) upstream the coarse sieving unit (120); and/or
e. a central vacuum unit (70) that provides a vacuum for the transport of vulcanized elastomeric powder.

11. Method for micronizing of vulcanized elastomeric materials, comprising the steps of:
a. rotating a first micronizing disc (20) in a first rotational direction (22);
b. rotating a second micronizing disc (10) in a second rotational direction (12), wherein the first micronizing disc (20) is in engagement with the second micronizing disc (10) in order to provide a micronizing contact area (30) wherein the first rotational direction (22) and the second rotational direction (12) are the same, the movement direction of the first and second micronizing discs (10, 20) at the micronizing contact area (30) are opposed to each other, the micronizing discs (10, 20) are shaped as truncated cones and the micronizing contact area (30) is provided in-between the surfaces of the cones;
c. feeding vulcanized elastomeric granules (114) to the micronizing contact area (30); and
d. rolling and simultaneously compressing the elastomeric granules (114) in-between the first and second micronizing discs (10, 20) in order to disintegrate the elastomeric granules (114) by deformation, heat generation and friction in-between the elastomeric granules (114) to form elastomeric powder (110); wherein
e. the rolling and compressing step further includes an oscillation of at least one of the first and second micronizing discs (10, 20) transversally with regard to the rotation axis thereof during the micronizing process; and the method comprising the further step of
f. generating the oscillation only by the separation and stretching of the vulcanized elastomeric granules within the micronizing contact area (30).

12. Method for micronizing of vulcanized elastomeric materials according to claim 11, wherein in the disintegration step further includes the cooling by introducing water mist.

13. Method for micronizing of vulcanized elastomeric materials according to one of the claims 11- 12, providing micronized elastomeric particles that have a surface area of 0,2 - 0,9 m²/g and/or a diameter of 10 - 250 µm.

## Patentansprüche

1. Eine Zerkleinerungsvorrichtung für vulkanisierte Elastomermaterialien (1), aufweisend:
a. eine erste Zerkleinerungsscheibe (20), welche in einer ersten Rotationsrichtung (22) rotiert;
b. eine zweite Zerkleinerungsscheibe (10), welche in einer zweiten Rotationsrichtung (12) rotiert, wobei
c. die erste Zerkleinerungsscheibe (20) mit der zweiten Zerkleinerungsscheibe (10) in Eingriff steht, um einen Zerkleinerungskontaktbereich (30) zum Zerkleinern von Elastomerkörnern (114) zu Elastomerpulver (110) bereitzustellen; und
d. die erste Rotationsrichtung (22) und die zweite Rotationsrichtung (12) gleich sind und die Bewegungsrichtungen der ersten Zerkleinerungsscheibe (20) und der zweiten Zerkleinerungsscheibe (10) in dem Zerkleinerungskontaktbereich (30) zueinander entgegen gerichtet sind,
**dadurch gekennzeichnet, dass**
e. die Zerkleinerungsscheiben (10, 20) als Kegelstümpfe geformt sind und der Zerkleinerungskontaktbereich (30) zwischen den Oberflächen der Kegel bereitgestellt wird; wobei
f. mindestens eine der Zerkleinerungsscheiben (10, 20) so angeordnet ist, dass sie während des Zerkleinerungsprozesses in Querrichtung zur Rotationsachse derselben oszilliert; und
g. die Zerkleinerungsvorrichtung keine externen Oszillationsmittel zum Oszillieren von mindestens einer der Zerkleinerungsscheiben (10, 20) aufweist.

2. Die Zerkleinerungsvorrichtung für vulkanisierte Elastomermaterialien (1) gemäß Anspruch 1, wobei die Rotationsgeschwindigkeit der ersten Zerkleinerungsscheibe (20) von der Rotationsgeschwindigkeit der zweiten Zerkleinerungsscheibe (10) verschieden ist, wobei die Rotationsgeschwindigkeit der einen Zerkleinerungsscheibe (10, 20) bevorzugt 10- bis 20-mal höher ist als die Rotationsgeschwindigkeit der anderen Zerkleinerungsscheibe (10, 20).

3. Die Zerkleinerungsvorrichtung für vulkanisierte Elastomermaterialien (1) gemäß einem der Ansprüche 1 oder 2, wobei mindestens eine der Zerkleinerungsscheiben (10, 20) mit einer Frequenz von 1.000 bis 10.000 Hz oszilliert.

4. Die Zerkleinerungsvorrichtung für vulkanisierte Elastomermaterialien (1) gemäß einem der Ansprüche 1 bis 3, wobei die Oszillation von mindestens einer der Zerkleinerungsscheiben (10, 20) durch das Trennen und das Dehnen der vulkanisierten Elastomerkörner innerhalb des Zerkleinerungskontaktbereichs (30) erzeugt wird.

5. Die Zerkleinerungsvorrichtung für vulkanisierte Elastomermaterialien (1) gemäß einem der Ansprüche 1 bis 4, wobei die Kontaktoberflächen (14, 24) der Zerkleinerungsscheiben (10, 20) mit einem verschleißfesten Beschichtungsmaterial beschichtet sind und / oder eine raue Oberfläche aufweisen.

6. Die Zerkleinerungsvorrichtung für vulkanisierte Elastomermaterialien (1) gemäß einem der Ansprüche 1 bis 5, weiterhin aufweisend ein elektronisch gesteuertes Zuführsystem (50) zum Bereitstellen von vulkanisierten Elastomerkörnern (114) mit einer elektronisch gesteuerten Zuführrate.

7. Die Zerkleinerungsvorrichtung für vulkanisierte Elastomermaterialien (1) gemäß einem der Ansprüche 1 bis 6, weiterhin aufweisend ein Hochdruck-Wassersprühnebelkühlsystem (40, 42) und / oder ein StickstoffKühlsystem.

8. Die Zerkleinerungsvorrichtung für vulkanisierte Elastomermaterialien (1) gemäß einem der Ansprüche 1 bis 7, weiterhin aufweisend ein elektronisches Steuerungssystem zum Steuern der Rotationsgeschwindigkeiten der ersten Zerkleinerungsscheibe (20) und der zweiten Zerkleinerungsscheibe (10).

9. Die Zerkleinerungsvorrichtung für vulkanisierte Elastomermaterialien (1) gemäß Anspruch 8, wobei das elektronische Steuerungssystem zum Steuern der ersten Rotationsgeschwindigkeit und der zweiten Rotationsgeschwindigkeit sowie das elektronisch gesteuerte Zuführsystem (50) ein gemeinsames programmierbares logisches Steuerungssystem aufweisen.

10. Die Zerkleinerungsvorrichtung für vulkanisierte Elastomermaterialien (1) gemäß einem der Ansprüche 1 bis 9, weiterhin aufweisend:
a. eine Pulveraktivierereinheit (2), welche die erste Zerkleinerungsscheibe (20) und die zweite Zerkleinerungsscheibe (10) umfasst; und / oder
b. eine Grobsiebeinheit (120), welche bevorzugt zwei Maschensiebe in Flussrichtung gesehen oberhalb der Pulveraktivierereinheit (2) aufweist; und / oder
c. einen Feinpulversammler (80) in Flussrichtung gesehen oberhalb der Grobsiebeinheit (120); und / oder
d. einen Grobpulversammler (90) in Flussrichtung gesehen oberhalb der Grobsiebeinheit (120); und / oder
e. eine zentrale Absaugeinheit (70), welche eine Absaugung zum Transport des vulkanisierten Elastomerpulvers bereitstellt.

11. Ein Verfahren zum Zerkleinern von vulkanisierten Elastomermaterialien, aufweisend die Schritte:
a. ein Rotieren einer ersten Zerkleinerungsscheibe (20) in einer ersten Rotationsrichtung (22);
b. ein Rotieren einer zweiten Zerkleinerungsscheibe (10) in einer zweiten Rotationsrichtung (12), wobei die erste Zerkleinerungsscheibe (20) mit der zweiten Zerkleinerungsscheibe (10) in Eingriff steht, um einen Zerkleinerungskontaktbereich (30) bereitzustellen, wobei die erste Rotationsrichtung (22) und die zweite Rotationsrichtung (12) gleich sind und die Bewegungsrichtungen der ersten Zerkleinerungsscheibe (20) und der zweiten Zerkleinerungsscheibe (10) in dem Zerkleinerungskontaktbereich (30) zueinander entgegen gerichtet sind, wobei die Zerkleinerungsscheiben (10, 20) als Kegelstümpfe geformt sind und der Zerkleinerungskontaktbereich (30) zwischen den Oberflächen der Kegel bereitgestellt wird;
c. ein Zuführen von vulkanisierten Elastomerkörnern (114) zu dem Zerkleinerungskontaktbereich (30); und
d. ein Rollen und gleichzeitiges Komprimieren der Elastomerkörner (114) zwischen der ersten Zerkleinerungsscheibe (20) und der zweiten Zerkleinerungsscheibe (10), um die Elastomerkörner (114) durch Verformung, Hitze-Erzeugung und Reibung zwischen den Elastomerkörnern (114) zu zerstückeln, um Elastomerpulver (110) auszubilden; wobei
e. der Roll- und Komprimier-Schritt weiterhin ein Oszillieren während des Zerkleinerungsprozesses mindestens einer der ersten Zerkleinerungsscheibe (20) und der zweiten Zerkleinerungsscheibe (10) in Querrichtung zur Rotationsachse derselben umfasst; und das Verfahren den weiteren Schritt aufweist:
f. ein Erzeugen der Oszillation nur durch das Trennen und das Dehnen der vulkanisierten Elastomerkörner innerhalb des Zerkleinerungskontaktbereichs (30).

12. Das Verfahren zum Zerkleinern von vulkanisierten Elastomermaterialien gemäß Anspruch 11, wobei der Zerstückelungsschritt weiterhin das Kühlen durch Einführen von Wassersprühnebel umfasst.

13. Das Verfahren zum Zerkleinern von vulkanisierten Elastomermaterialien gemäß einem der Ansprüche 11 - 12, wobei zerkleinerte Elastomerpartikel bereitgestellt werden, welche einen Oberflächenbereich von 0,2 - 0,9 m²/g und / oder einen Durchmesser von 10 - 250 µm aufweisen.

## Revendications

1. Dispositif de micronisation pour des matériaux élastomères vulcanisés (1), comprenant:
a. un premier disque de micronisation (20) tournant dans un premier sens de rotation (22);
b. un second disque de micronisation (10) tournant dans un second sens de rotation (12), dans lequel:
c. le premier disque de micronisation (20) vient en prise avec le second disque de micronisation (10) afin de former une zone de contact de micronisation (30) pour microniser des granules d'élastomère (114) en poudre d'élastomère (110); et
d. le premier sens de rotation (22) et le second sens de rotation (12) sont les mêmes et les sens de déplacement du premier et du second disque de micronisation (10, 20) dans la zone de contact de micronisation (30) sont opposés l'un par rapport à l'autre, **caractérisé en ce que**:
e. les disques de micronisation (10, 20) sont réalisés sous forme de cônes tronqués et la zone de contact de micronisation (30) est formée dans l'intervalle entre les surfaces des cônes;
f. au moins l'un des disques de micronisation (10, 20) est configuré de manière à osciller transversalement par rapport à son axe de rotation durant le processus de micronisation; et
g. le dispositif de micronisation ne comprend pas de moyen d'oscillation externe pour l'oscillation d'au moins l'un des disques de micronisation (10, 20).

2. Dispositif de micronisation pour des matériaux élastomères vulcanisés (1) selon la revendication 1, dans lequel la vitesse de rotation du premier disque de micronisation (20) et la vitesse de rotation du second disque de micronisation (10) sont différentes, la vitesse de rotation de l'un des disques de micronisation (10, 20) étant de préférence de 10 à 20 fois supérieure à la vitesse de rotation de l'autre disque de micronisation (10, 20).

3. Dispositif de micronisation pour des matériaux élastomères vulcanisés (1) selon l'une des revendications 1 ou 2, dans lequel au moins l'un des disques de micronisation (10, 20) oscille à une fréquence de 1 000 à 10 000 Hz.

4. Dispositif de micronisation pour des matériaux élastomères vulcanisés (1) selon l'une des revendications 1 à 3, dans lequel l'oscillation d'au moins l'un des disques de micronisation (10, 20) est produite par la séparation et l'étirement des granules d'élastomère vulcanisés au sein de la zone de contact de micronisation (30).

5. Dispositif de micronisation pour des matériaux élastomères vulcanisés (1) selon l'une des revendications 1 à 4, dans lequel les surfaces de contact (14, 24) des disques de micronisation (10, 20) sont revêtues d'un matériau de revêtement résistant à l'usure et/ou présentent une surface rugueuse.

6. Dispositif de micronisation pour des matériaux élastomères vulcanisés (1) selon l'une des revendications 1 à 5, comprenant en outre un système d'alimentation à contrôle électronique (50) pour délivrer des granules d'élastomère vulcanisés (114) à un débit d'alimentation contrôlé de façon électronique.

7. Dispositif de micronisation pour des matériaux élastomères vulcanisés (1) selon l'une des revendications 1 à 6, comprenant en outre un système de refroidissement à brouillard d'eau sous haute pression (44, 42) et/ou un système de refroidissement à l'azote.

8. Dispositif de micronisation pour des matériaux élastomères vulcanisés (1) selon l'une des revendications 1 à 7, comprenant en outre un système de contrôle électronique pour contrôler les vitesses de rotation du premier et du second disque de micronisation (10, 20).

9. Dispositif de micronisation pour des matériaux élastomères vulcanisés (1) selon la revendication 8, dans lequel le système de contrôle électronique pour le contrôle de la première et de la seconde vitesse de rotation et le système d'alimentation à contrôle électronique comprennent un système commun (50) de contrôle à logique programmable.

10. Dispositif de micronisation pour des matériaux élastomères vulcanisés (1) selon l'une des revendications 1 à 9, comprenant en outre :
a. une unité d'activation de poudre (2) qui comprend le premier et le second disque de micronisation (10, 20); et/ou
b. une unité de tamisage grossier (120), comprenant de préférence deux tamis à mailles en amont de l'unité d'activation de poudre (2); et/ou
c. un collecteur de poudre fine (80) en amont de l'unité de tamisage grossier (120); et/ou
d. un collecteur de poudre grossière (90) en amont de l'unité de tamisage grossier (120);et/ou
e. une unité d'aspiration centrale (70) qui produit une aspiration pour le transport de la poudre d'élastomère vulcanisée.

11. Procédé de micronisation de matériaux élastomères vulcanisés, comprenant les étapes suivantes:
a. rotation d'un premier disque de micronisation dans un premier sens de rotation (22);
b. rotation d'un second disque de micronisation (10) dans un second sens de rotation (12), le premier disque de micronisation (20) venant en prise avec le second disque de micronisation (10) afin de former une zone de contact de micronisation (30), le premier sens de rotation (22) et le second sens de rotation (12) étant les mêmes, les sens de déplacement du premier et du second disque de micronisation (10, 20) dans la zone de contact de micronisation (30) étant opposés l'un par rapport à l'autre, les disques de micronisation (10, 20) étant conformés en cônes tronqués et la zone de contact de micronisation (30) étant formée dans l'intervalle entre les surfaces des cônes;
c. l'apport de granules élastomères vulcanisées (114) dans la zone de contact de micronisation (30); et
d. le roulage et la compression simultanée des granules d'élastomère (114) dans l'intervalle compris entre le premier et le second disque de micronisation (10, 20) afin de désintégrer les granules d'élastomère (114) par déformation, génération de chaleur et friction entre les granules élastomères (114) pour former une poudre d'élastomère (110); dans lequel
e. l'étape de roulage et de compression comprend en outre au moins une oscillation de l'un des premier et second disques de micronisation (10, 20) transversalement par rapport à son axe de rotation durant le processus de micronisation; et le procédé comprend l'étape ultérieure de:
f. génération de l'oscillation uniquement par la séparation et l'étirement des granules d'élastomère vulcanisé au sein de la zone de contact (30) de micronisation.

12. Procédé de micronisation de matériaux élastomères vulcanisés selon la revendication 11, dans lequel l'étape de désintégration comprend en outre le refroidissement par introduction d'un brouillard d'eau.

13. Procédé de micronisation de matériaux élastomères vulcanisés selon l'une des revendications 11 à 12, comprenant l'obtention de particules d'élastomère micronisé qui présentent une surface spécifique de 0,2 à 0,9 m²/g et/ou un diamètre de 10 à 250 µm.
